**Europäisches Patentamt**

**European Patent Office**

**Office européen des brevets**

(11) Veröffentlichungsnummer: **0 030 339**
**B1**

(12) **EUROPÄISCHE PATENTSCHRIFT**

(45) Veröffentlichungstag der Patentschrift:
**28.09.83**

(21) Anmeldenummer: **80107453.5**

(22) Anmeldetag: **28.11.80**

(51) Int. Cl.³: **A 23 L 2/08**, A 23 L 2/12

(54) Verfahren zum Konzentrieren wässriger Lösungen temperaturempfindlicher Stoffe.

(30) Priorität: **07.12.79 DE 2949215**

(43) Veröffentlichungstag der Anmeldung:
**17.06.81 Patentblatt 81/24**

(45) Bekanntmachung des Hinweises auf die Patenterteilung:
**28.09.83 Patentblatt 83/39**

(84) Benannte Vertragsstaaten:
**AT BE CH DE FR GB IT LI NL SE**

(56) Entgegenhaltungen:
**AU-B-12 291**
**DE-A-2 517 928**
**FR-A-2 202 655**

(73) Patentinhaber: **Henkel Kommanditgesellschaft auf Aktien, Postfach 1100 Henkelstrasse 67, D-4000 Düsseldorf 1 (DE)**

(72) Erfinder: **Göbel, Gerd, Dr., Dorfstrasse 16, D-4006 Erkrath 2 (DE)**
Erfinder: **Behr, Norbert, Kölner Strasse 24, D-5657 Haan (DE)**
Erfinder: **van der Mei, Henk, Schöner Busch 4, D-3250 Rinteln 15 (DE)**
Erfinder: **Carduck, Franz-Josef, Dr., Landstrasse 18, D-5657 Haan (DE)**
Erfinder: **von Ettingshausen, Othmar, Dr., Ackerstrasse 22, D-4000 Düsseldorf 22 (DE)**

BUNDESDRUCKEREI BERLIN

## Verfahren zum Konzentrieren wäßriger Lösungen temperaturempfindlicher Stoffe

Die Erfindung betrifft ein verbessertes Verfahren zum produktschonenden Konzentrieren wäßriger Lösungen temperaturempfindlicher Stoffe unter Verwendung einer Gefrierkonzentrierstufe.

Flüssige Nahrungsmittel — insbesondere Frucht- und Gemüsesäfte, Fruchtextrakte, Kräuterauszüge oder dergleichen — sind Beispiele für derartige wäßrige Lösungen, die mannigfache temperaturempfindliche Stoffe, wie Farbstoffe, Aromen, Vitamine oder andere Wirkstoffe, enthalten. In der Regel fallen solche wäßrige Lösungen bei ihrer Gewinnung mit nur sehr geringen Konzentrationen im Bereich von 5 bis 15 Gewichtsprozent Trockensubstanz an. Üblicherweise ist man bestrebt, den Feststoffgehalt dieser Lösungen durch Entzug von Wasser zu erhöhen, wobei die unterschiedlichsten Konzentrierverfahren Verwendung finden.

Das zum Konzentrieren häufig angewendete Eindampfverfahren weist den gravierenden Nachteil auf, daß hierbei die Lösung und mithin auch die in ihr gelösten Substanzen erhöhten Temperaturen ausgesetzt werden, aufgrund derer meist nur ein geringwertiges konzentriertes Produkt resultiert. Erhöhte Temperaturen bedingen nämlich insgesamt sowohl eine Schädigung der temperaturempfindlichen Stoffe, die zum Beispiel in Vitaminverlusten, Denaturierungen oder Produktveränderungen im Sinne der Maillard-Reaktion zum Ausdruck kommt, als auch Verluste an leichtflüchtigen Komponenten wie Aromen, die zusammen mit dem abgetrennten Lösungsmittel Wasser dem Konzentrat entzogen werden.

Neben Extraktionsverfahren, die sich zwar nur in einigen wenigen Ausnahmefällen anwenden lassen, bieten Ultrafiltration oder Umkehrosmose gleichfalls die Möglichkeit zum Konzentrieren solch wäßriger Lösungen ohne eine thermische Belastung der Inhaltsstoffe. Jedoch sind die mit den beiden letztgeannten Verfahren erzielbaren Endkonzentrationen aufgrund des stark ansteigenden osmotischen Druckes nur begrenzt; sie liegen im Bereich von 25 bis 30 Gewichtsprozent Trockensubstanz im Konzentrat.

Demgegenüber hat sich das Gefrierkonzentrieren wäßriger Lösungen temperaturempfindlicher Stoffe als ein durchaus praktikables Verfahren erwiesen, bei dem im allgemeinen — je nach Produkteigenschaften — maximale Feststoffkonzentrationen von 40 bis 42 Gewichtsprozent Trockensubstanz erreichbar sind. Das Gefrierkonzentrieren stellt gleichfalls ein Verfahren zum produktschonenden Aufkonzentrieren solcher Lösungen dar, da hierbei das Wasser nicht über die Dampfphase, sondern über die kristalline Phase in Form von Eis abgetrennt wird. Die hierbei angewendeten niederen Prozeßtemperaturen verhindern sowohl einen Verlust an Inhaltsstoffen als auch deren Schädigung durch chemische Reaktionen, so daß die gelösten hochwertigen Substanzen unverändert in Menge und Zusammensetzung im Konzentrat erhalten bleiben. Das Separieren des Eises vom Konzentrat erfolgt durch rein mechanische Verfahren, wie Zentrifugieren, Filtrieren, Sieben oder auch mit Hilfe von Waschsäulen. Zur Zeit findet das Gefrierkonzentrieren vielfältige Anwendung bei der Gewinnung hochwertiger Konzentrate, beispielsweise in der Lebensmittelindustrie zur Herstellung von Tee- und Kaffee-Extrakten.

Nachteile dieses Verfahrens sind jedoch einerseits in den — im Vergleich zum Eindampfverfahren — höheren Kosten sowie andererseits in den hierbei erzielbaren vergleichsweise niedrigen Endkonzentrationen an Trockensubstanz im Konzentrat zu sehen. Zudem machen sich mit steigendem Gehalt an gelösten Feststoffen im Konzentrat zunehmende Produktverluste bemerkbar, die durch ein Anhaften von Konzentrat und Trübstoffen an den abgetrennten Eiskristallen hervorgerufen werden. Eine Verminderung der so bedingten Produktverluste läßt sich nur durch verlängerte Waschzeiten der Eiskristalle und somit einer erheblich geringeren Leistung des Gesamtverfahrens erzielen.

Die Aufgabe der vorliegenden Erfindung ist es daher, ein Verfahren zum produktschonenden Konzentrieren wäßriger Lösungen temperaturempfindlicher Stoffe zu entwickeln, bei dem zwar einerseits ein Gefrierkonzentrierprozeß Anwendung findet, andererseits jedoch die vorstehend erwähnten Nachteile dieses Verfahrens vermieden werden. Insbesondere betrifft diese Aufgabenstellung die Gewinnung eines Konzentrates mit einem höheren Gehalt an Trockensubstanz.

Gegenstand der Erfindung ist somit ein Verfahren zum Konzentrieren einer wäßrigen Lösung temperaturempfindlicher Stoffe unter Verwendung einer Gefrierkonzentrierstufe, welches dadurch gekennzeichnet ist, daß man

a) die Lösung einem Trennverfahren in Form eines Ultrafiltrationsprozesses und
b) die in Stufe a) abgetrennte, die temperaturempfindlichen Stoffe enthaltende Lösung einem Gefrierkonzentrierprozeß unterwirft.

Überraschenderweise wurde nämlich gefunden, daß man den Wirkungsgrad eines herkömmlichen Gefrierkonzentrierverfahrens hinsichtlich der Endkonzentration an Trockensubstanz im Konzentrat wesentlich verbessern kann, indem man der Gefrierkonzentrierstufe b) ein Trennverfahren a) in Form einer Ultrafiltration vorschaltet. Erfindungswesentlich ist hierbei, daß bei diesem Trennverfahren der Gehalt an makromolekularen Substanzen in der zu konzentrierenden Lösung vermindert beziehungsweise diese Stoffe vollständig aus der Lösung eliminiert werden. So lassen sich mit Hilfe eines Ultrafiltrationsprozesses beispielsweise Polymermoleküle, Polysaccharide, Farbstoffe, Pektine und unlösliche Trübstoffe aus der Lösung abtrennen. Auf diese Weise werden die das Gefrierkonzentrierverfahren limitierenden Faktoren, die eine Viskositätserhöhung des Konzentrats während des Gefrierkonzentrierens bewirken und damit auch die Leistung dieser Konzentrierstufe senken, entfernt. Die in der restlichen Lösung verbleibenden temperaturempfindlichen und leichtflüchtigen Anteile, zum Beispiel Aromen, können dann mit Vorteil in der anschließenden Gefrierkonzentrierstufe bis zu hohen Endkonzentrationen angereichert werden, wobei sich die zum Waschen der Eiskristalle erforderlichen Zeiten und Wassermengen erheblich reduzieren und gleichfalls die Produktverluste im abgetrennten Eis deutlich senken lassen.

Weitere Vorteile hinsichtlich einer effektiveren Durchführung des Gefrierkonzentrierprozesses resultieren erfindungsgemäß ferner durch eine Kombination mehrerer Trennverfahren. Unter Kombination mehrerer Trennverfahren ist hierbei eine der Ultrafiltration nachgeschaltete weitere Trennstufe zu verstehen. Dementsprechend unterwirft man die in der Ultrafiltrationsstufe a) abgetrennte, die temperaturempfinlichen Stoffe enthaltende Lösung in einer dem Gefrierkonzentrierprozeß vorgeschalteten Stufe c) einem weiteren Trennverfahren. Als solches kommen beispielsweise Umkehrosmose, Verdampfer oder Adsorptionsverfahren in Frage.

So lassen sich zum Beispiel mit Hilfe des Umkehrosmoseverfahrens weitere, weniger temperaturempfindliche Stoffe, wie Mono- und Disaccharide, aus der zu konzentrierenden Lösung eliminieren, was wiederum einer verstärkten Anreicherung der Aromenkomponente in der Gefrierkonzentrierstufe zugute kommt. Auf diese Weise können hierbei für die niedermolekularen Bestandteile erheblich höhere Konzentrationsfaktoren (10- bis 30fach) erzielt werden. Beim Vorliegen lösungsmittelhaltiger Flüssigkeiten, wie wäßrig/alkoholischen Extrakten, läßt sich mit Vorteil beispielsweise ein Verdampfer als weitere Trennstufe einsetzen. Die Abtrennung des leichtflüchtigen Lösungsmittels aus der wäßrigen Lösung mit Hilfe einer Verdampferstufe erweist sich im Hinblick auf das nachfolgende Gefrierkonzentrierverfahren insofern als vorteilhaft, da hierbei ein zu starkes Absinken der Gefriertemperaturen vermieden wird.

Erfindungsgemäß ist es bevorzugt, daß man die Lösung in Stufe c) als weiterem Trennverfahren einem Umkehrosmoseprozeß unterwirft.

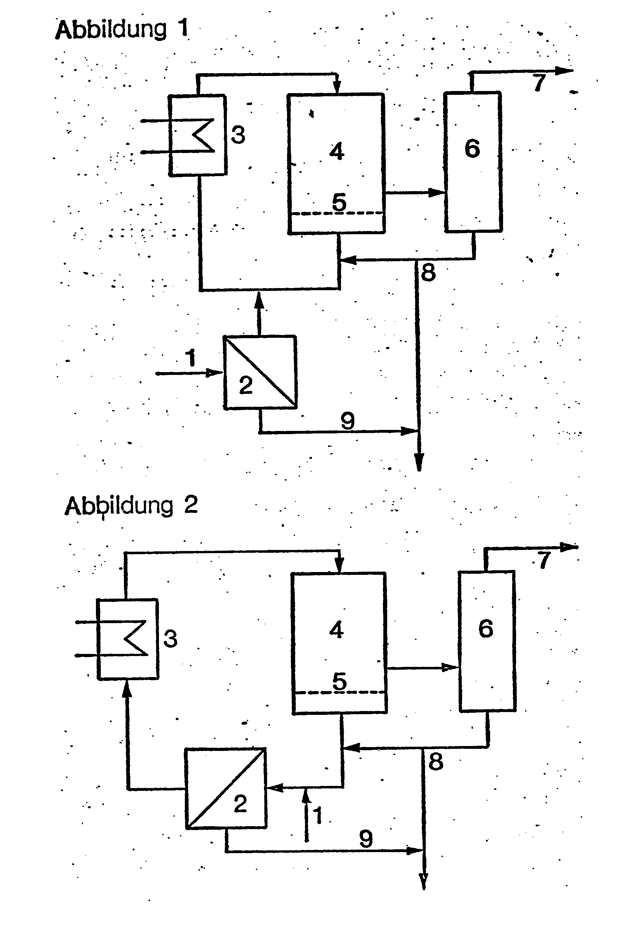

In Abb. 1 wird das erfindungsgemäße Verfahren anhand eines beispielhaften Fließschemas näher erläutert. Hierin bedeuten:

    1. Einspeisung der zu konzentrierenden Lösung
    2. Kombination von Ultrafiltration und Umkehrosmose
    3. Kratzkühler der Gefrierkonzentrierstufe
    4. Kristallisator der Gefrierkonzentrierstufe
    5. Eisfilter der Gefrierkonzentrierstufe
    6. Waschsäule der Gefrierkonzentrierstufe
    7. abgetrenntes Eis und Eiswasser
    8. Konzentrat aus der Gefrierkonzentrierstufe
    9. Konzentrat aus der Ultrafiltration/Umkehrosmose

Die zu konzentrierende Lösung 1 wird unter Druck in die Ultrafiltrationsanlage 2 — der gegebenenfalls eine Umkehrosmoseanlage angeschlossen ist — eingeführt. Im allgemeinen werden mehrere Ultrafiltrationseinheiten zu einer mehrstufigen Anlage zusammengeschlossen, um die so erzielbare höhere Leistung der Gesamtanlage auch bei niedrigen Produktkonzentrationen zu nutzen. Die gebräuchlichen Ultrafiltrationsanlagen arbeiten mit unterschiedlichen Modultypen, beispielsweise Platten-, Rohr-, Spiral- und Hohlfasermodule. In der Regel werden in solchen Ultrafiltrationsanlagen Drücke im Bereich von 1 bis 10 bar angewendet, wobei höhere Drücke eine höhere Permeationsrate bewirken. Ausschlaggebend für den maximal anwendbaren Druck ist jedoch in erster Linie die Druckfestigkeit der jeweils verwendeten Membrane. Die Auswahl der Membrantype wiederum ist primär von dem zu trennenden Gut, das heißt von der jeweilig zu konzentrierenden Lösung, abhängig. Für ein spezielles Trennproblem ist es unerläßlich, die optimale Membrantype hinsichtlich Selektivität, Retentionsvermögen und Permeationsrate durch Versuche zu ermitteln. Ähnliches gilt auch für die Auswahl der zur Umkehrosmose benötigten Membrantype. Entscheidend für die Trennwirkung der Umkehrosmose sind außer Druck und Ausgangskonzentration der Lösung eben die Komponenten der zu konzentrierenden Lösung.

Nach Abtrennen der höhermolekularen Anteile in der Ultrafiltrations- und gegebenenfalls Umkehrosmoseanlage wird die die niedermolekularen temperaturempfindlichen Stoffe enthaltende Lösung in den Kristallisationskreislauf der Gefrierkonzentrieranlage eingeleitet.

In der Regel setzen sich die gebräuchlichen Gefrierkonzentrieranlagen aus einer Kühlvorrichtung, dem eigentlichen Kristallisator — der dem Wachstum der Eiskristalle dient — sowie einer entsprechenden Trenn- und Wascheinrichtung für das gebildete Eis zusammen. Die Art der in diesen einzelnen Verfahrensschritten des Gefrierkonzentrierprozesses zu verwendenden Gerätetypen ist für das erfindungsgemäße Verfahren nicht von entscheidender Bedeutung. Vielmehr gilt auch hierfür, daß die das Gefrierkonzentrierverfahren beeinflussenden Parameter, wie Gefriertemperatur, Verweildauer im Kristallisator sowie die verwendeten Gerätetypen, im wesentlichen von der Zusammensetzung der zu konzentrjerenden Lösung bestimmt werden und die optimalen Werte und Gegebenheiten jeweils durch entsprechende Versuche zu ermitteln sind. In gleicher Weise trifft dies auch für den Betrieb der Separier- und Wascheinrichtung zu. Alle diesen Teil der Gefrierkonzentrieranlage betreffenden Werte, zum Beispiel Waschdauer, Waschwassermenge und -druck, sollten je nach den Konzentrateigenschaften während des Betriebes ständig so eingestellt werden, daß die Produktverluste im abgetrennten Wasser vorzugsweise weniger als 200 ppm betragen. Gewünschtenfalls kann auch die Gefrierkonzentrieranlage mehrstufig ausgelegt sein.

In dem in Abb. 1 beispielhaft wiedergegebenen Fließschema des erfindungsgemäßen Verfahrens gelangt die Lösung zunächst über einen Kratzkühler 3 in den Kristallisator 4. Über den Eisfilter 5 wird die eisfreie Lösung im Kreislauf durch Kratzkühler und Kristallisator geleitet. Das im Kristallisator gewonnene Gemisch aus Konzentrat und Eiswasser wird hingegen periodisch aus diesem abgezogen und zur Abtrennung der Eiskristalle vom Konzentrat in die Waschsäule 6 eingeführt. In der Regel enthält das in der Waschsäule abgetrennte Eis und Eiswasser 7 nur noch geringfügige, vernachlässigbare Mengen an anhaftendem oder gelöstem Feststoff. Gewünschtenfalls kann das im Gefrierkonzentrierprozeß gewonnene Konzentrat 8 zur weiteren Aufkonzentrierung erneut in den Kristallisationskreislauf zurückgeführt werden. Andernfalls wird dieses Konzentrat jedoch direkt der Waschsäule entnommen und gegebenenfalls mit der in der Trennstufe 2 anfallenden restlichen Lösung 9, die die durch Ultrafiltration und Umkehrosmose abgetrennten Stoffe der Ausgangslösung enthält, vereinigt.

Im Sinne des erfindungsgemäßen Verfahrens hat es sich jedoch als besonders vorteilhaft erwiesen, die bei diesem Trennverfahren anfallende restliche Lösung nicht unmittelbar mit dem aus dem Gefrierkonzentrierprozeß gewonnenen Konzentrat zu vereinigen, sondern zunächst weiter — gegebenenfalls bis zur Trocknung — aufzukonzentrieren. Da diese Lösung weniger temperaturempfindliche Bestandteile der Ausgangslösung enthält, können zum Aufkonzentrieren ohne Schaden alle üblichen Verfahren Verwendung finden, bei denen die Lösung erhöhten Temperaturen ausgesetzt werden muß. Dementsprechend unterwirft man vorzugsweise die bei der Ultrafiltration (Stufe a) oder bei der Ultrafiltration und Umkehrosmose (Stufe a und c) anfallenden, die weniger temperaturempfindlichen Stoffe enthaltenden, restlichen Lösungen in einer Stufe d) einem Verdampfungs- und/oder Trocknungsprozeß. Für einen solchen Verdampfungs- und/oder Trocknungsprozeß kommen beispielsweise Röhren-, Platten-, Fallfilm-, Dünnschicht- oder Zentrifugalverdampfer sowie Sprüh-, Walzen- oder Schaumtrockner in Frage.

Das auf diese Weise gewonnene Konzentrat kann entweder alleine oder aber zusammen mit dem Konzentrat des Gefrierkonzentrierprozesses konfektioniert beziehungsweise gegebenenfalls einer weiteren Verarbeitung zugeführt werden. Erfindungsgemäß ist es jedoch bevorzugt, daß man die im Gefrierkonzentrierprozeß (Stufe b) und im Verdampfungs- und/oder Trocknungsprozeß (Stufe d) erhaltenen Konzentrate miteinander vereinigt. Bei Anwendung des erfindungsgemäßen Verfahrens resultiert somit ein Hochkonzentrat mit einem Gehalt von 65% und mehr an Trockensubstanz, das auch die temperatursensiblen Bestandteile der Ausgangslösung unverändert und schonenst angereichert aufweist.

Nach einer besonderen, bevorzugten Ausführungsform des erfindungsgemäßen Verfahrens werden Ultrafiltration (Stufe a) oder gegebenenfalls Ultrafiltration und Umkehrosmose (Stufe a und c) in den Kristallisationskreislauf der Gefrierkonzentrieranlage (Stufe b) integriert. Dementsprechend führt man die in den Stufen a) oder a) und c) abgetrennten, die temperaturempfindlichen Stoffe enthaltenden Lösungen sowie die den Kristallisator der Gefrierkonzentrierstufe verlassende eisfreie Lösung kontinuierlich im Kreislauf durch die Stufen a) oder a) und c) sowie b). Diese Anordnung der Trennverfahren in dem Kreislauf des Gefrierkonzentrierprozesses bietet den Vorteil, daß auch Stoffe, die mit steigendem Feststoffgehalt infolge einer Überschreitung der Löslichkeitsgrenzen zu Ausfällungen oder Trübungen neigen, aus diesem Kreislauf abgetrennt werden können und somit die Leistung des Gefrierkonzentrierverfahrens nicht beeinträchtigen. In Abb. 2 wird diese bevorzugte Ausführungsform des erfindungsgemäßen Verfahrens gleichfalls anhand eines beispielhaften Fließschemas erläutert. Die in der Abbildung verwendeten Bezugszahlen haben die vorstehend angegebene Bedeutung.

Die Anwendung einer Ultrafiltrationsstufe in Kombination mit einer Umkehrosmosestufe zum Konzentrieren von Fruchtsäften wird bereits in der FR-A-2 202 655 beschrieben. Bei diesem Verfahren wird der Muttersaft in der Ultrafiltrationsstufe in ein Konzentrat I und ein Ultrafiltrat aufgetrennt. Das so gewonnene Ultrafiltrat wird in der nachfolgenden Umkehrosmosestufe aufkonzentriert, d. h., es wird Wasser aus dem Ultrafiltrat abgetrennt. Hierbei fallen ein Konzentrat II und ferner ein Osmoat an. Die in den beiden Stufen gewonnenen Konzentrate I und II werden vereinigt und führen so zu dem erwünschten Produkt; das Osmoat hat als Nebenprodukt keinerlei Bedeutung. Zur Konzentrationserhöhung kann das Konzentrat I vor der Vereinigung mit dem Konzentrat II gegebenenfalls zusätzlich einer Gefriertrocknungsstufe unterworfen werden.

Im Vergleich zur erfindungsgemäßen Arbeitsweise ergeben sich folgende Unterschiede: Die Umkehrosmosestufe ermöglicht beim Verfahren gemäß der FR-A-2 202 655 keine ausreichende Trennung von Saftinhaltsstoffen und Wasser. Daher müssen hierbei hohe Verluste an Aromen im abgetrennten Wasser (Osmoat) hingenommen werden, was im Gehalt an Trockensubstanz in den gewonnenen Konzentraten I und II zum Ausdruck kommt.

Demgegenüber wirken beim erfindungsgemäßen Verfahren die Ultrafiltrations- sowie die Umkehrosmosestufe in anderer Weise: Beide Membrantrennverfahren werden hierbei nicht als Konzentrierverfahren, d. h. zum Abtrennen von Wasser, eingesetzt, sondern als Trennverfahren, bei denen unterschiedlich temperaturempfindliche Fraktionen anfallen. Die Aufkonzentrierung der thermolabilen Fraktionen, d. h. Ultrafiltrat bzw. Osmoat, erfolgt erfindungsgemäß ausschließlich in der Gefrierkonzentrierstufe. Eine weitere Aufbereitung der in der Ultrafiltrations- bzw. Umkehrosmosestufe anfallenden Konzentrate, welche die thermisch stabilen Anteile enthalten, kann gegebenenfalls in einem Verdampfungs- und/oder Trocknungsprozeß erfolgen.

In den AU-B-12 291/66 und DE-A-2 517 928 werden Verfahrensvarianten einer Gefriertrocknung beschrieben, die das Ziel verfolgen, die Eisbildung bzw. die Eis-Konzentrat-Trennung zu verbessern.

Die erfindungsgemäße Kombination der verschieden wirksamen Trennstufen vor einer Gefrierkonzentrierstufe ist dem vorstehend erörterten Stand der Technik nicht zu entnehmen und wird durch denselben auch nicht nahegelegt.

Die nachstehend wiedergegebenen Beispiele verdeutlichen die Durchführung des erfindungsgemäßen Verfahrens sowie die damit erzielbaren Vorteile.

### Beispiel 1

Aus einem Erdbeermuttersaft mit einem Feststoffgehalt von 6,4% Trockensubstanz (TS) wurden in einer Ultrafiltrationsanlage mit Hilfe einer Celluloseacetat-Membran (Trennwert: Molekulargewichte von 10 000 bis 20 000) Polysaccharide, Pektine und Farbstoffe abgetrennt. Die verwendete Ultrafiltrationsanlage war mit einem 6 m² Modul der Firma DDS/Dänemark und einer Membrane Typ 600 ausgestattet. Sie wurde bei einer Temperatur von 20° C und einem Druck im Bereich von 8 bis 10 bar mit einem Durchsatz von 1200 l/h und einer Permeationsrate von 15 l/m²h betrieben. Das gewonnene farbarme Permeat wurde durch anschließendes Gefrierkonzentrieren angereichert. Die verwendete Gefrierkonzentrieranlage der Firma Grenco/Niederlande — Pilotanlage Typ W 6 — wies eine Nennleistung von 15 l H₂O/h auf.

Die Auswirkung der Ultrafiltration auf die Viskosität des ultrafiltrierten Saftes beim Gefrierkonzentrieren veranschaulicht die nachfolgende Tabelle:

| Konzentration % TS | Viskosität vor UF + mm²/sec | Viskosität nach UF + mm²/sec |
|---|---|---|
| 10 | 3 | 2,7 |
| 20 | 6 | 4 |
| 30 | 16 | 7 |
| 40 | 57 | 15 |
| 50 | – | 50 |

TS = Trockensubstanz.
UF = Ultrafiltration.
+  = Viskosität bei Gefriertemperatur.

In einem Ultrakurzzeitverdampfer der Firma Alfa-Laval/Schweden — Centritherm CT 1 B — mit einer Nennleistung von 50 kg H₂O/h wurde die in der Ultrafiltrationsstufe abgetrennte Lösung weiter aufkonzentriert.

Die nachfolgende Stoffbilanz gibt einen Überblick über die in diesem Beispiel gewonnenen Konzentrate:

# 0 030 339

**Stoffbilanz**

**Muttersaft**

↓ 100 kg
6,4% TS

**Ultrafiltration**

95 kg           5 kg
6,1% TS         12% TS

**Gefrierkonzentration**       **Verdampfer**

10,6 kg          0,85 kg
55% TS          71% TS

**Fruchsaftkonzentrat**

11,4 kg
56,1% TS

## Beispiel 2

Soweit nicht anders vermerkt, wurden auch in diesem Beispiel die in Beispiel 1 beschriebenen Geräte und Anlagen unter den angegebenen Bedingungen verwendet.

Aus einem Kirschmuttersaft mit einem Feststoffgehalt von 12% Trockensubstanz wurden durch Ultrafiltration mit Hilfe einer Celluloseacetat-Membran bei 7 bar Betriebsdruck Polysaccharide, Pektine sowie Farbstoffe abgetrennt und die diese Stoffe enthaltende Lösung im Ultrakurzzeitverdampfer auf 70% TS aufkonzentriert.

Das gewonnene farbarme, zucker- und aromenhaltige Permeat wurde einer Umkehrosmose unterworfen. Die verwendete Umkehrosmoseanlage war mit einem 6 m$^2$ Modul der Firma DDS/Dänemark und einer Membrane Typ 870 ausgestattet. Sie wurde bei einer Temperatur von 5°C und einem Druck von 50 bar mit einem Durchsatz von 1200 l/h und einer Permeationsrate von 7 l/m$^2$ h betrieben. In dieser Umkehrosmoseanlage wurden mit Hilfe einer Celluloseacetat-Membran (Trennwert: Molekulargewicht 500) der fruchteigene Zucker sowie der Rest an Farbstoffen abgetrennt und auf circa 25% TS angereichert. Die diese Stoffe enthaltende Lösung wurde gleichfalls im Ultrakurzzeitverdampfer auf 70% TS angereichert.

Das bei der Umkehrosmose gewonnene, die temperaturempfindlichen Aromakomponenten enthaltende Permeat wurde durch anschließendes Gefrierkonzentrieren zu einem 18,5fachen Aromakonzentrat mit über 53% TS angereichert.

Die vereinigten Konzentrate — aus Gefrierkonzentrier- und Verdampferstufen — ergaben ein stabiles Fruchtsafthochkonzentrat mit über 65% TS, das durch Rückverdünnen mit entmineralisiertem Wasser zu einem in Geschmack, Farbe und Konsistenz naturidentischen Fruchtsaft führt.

Die nachfolgende Stoffbilanz zeigt die erzielten Ergebnisse:

Stoffbilanz
Muttersaft

100 kg
12 kg TS
12% TS

Ultrafiltration ——— 10 kg ——— Verdampfer ———
              1,6 kg = 16% TS

90 kg
10,4 kg TS
11,6% TS

2,3 kg
1,6 kg TS
70% TS

Umkehrosmose ——— 30 kg ——— Verdampfer ———
             7,5 kg = 25% TS

60 kg
2,9 kg TS
4,8% TS

10,7 kg
7,5 kg TS
70% TS

Gefrierkonzentration

5,4 kg
2,9 kg TS
53% TS

Furchsaftkonzentrat

18,4 kg
12 kg TS
65% TS

**Patentansprüche**

1. Verfahren zum Konzentrieren einer wäßrigen Lösung temperaturempfindlicher Stoffe unter Verwendung einer Gefrierkonzentrierstufe, dadurch gekennzeichnet, daß man

a)  die Lösung einem Trennverfahren in Form eines Ultrafiltrationsprozesses und
b)  die in Stufe a) abgetrennte, die Temperaturempfindlichen Stoffe enthaltende Lösung einem Gefrierkonzentrierprozeß unterwirft.

2. Verfahren nach Anspruch 1, dadurch gekennzeichnet, daß man die in Stufe a) abgetrennte, die temperaturempfindlichen Stoffe enthaltende Lösung in einer dem Gefrierkonzentrierprozeß vorgeschalteten Stufe c) einem weiteren Trennverfahren unterwirft.

3. Verfahren nach Anspruch 1 und 2, dadurch gekennzeichnet, daß man die Lösung in Stufe c) als weiterem Trennverfahren einem Umkehrosmoseprozeß unterwirft.

4. Verfahren nach Anspruch 1 bis 3, dadurch gekennzeichnet, daß man die in den Stufen a) oder a) und c) anfallenden, die weniger temperaturempfindlichen Stoffe enthaltenden, restlichen Lösungen in einer Stufe d) einem Verdampfungs- und/oder Trocknungsprozeß unterwirft.

5. Verfahren nach Anspruch 1 bis 4, dadurch gekennzeichnet, daß man die in den Stufen b) und d) erhaltenen Konzentrate miteinander vereinigt.

6. Verfahren nach Anspruch 1 bis 5, dadurch gekennzeichnet, daß man die in den Stufen a) oder a) und c) abgetrennten, die temperaturempfindlichen Stoffe enthaltenden Lösungen sowie die den Kristallisator der Gefrierkonzentrierungsstufe verlassende eisfreie Lösung kontinuierlich im Kreislauf durch die Stufen a) oder a) und c) sowie b) führt.

## Claims

1. A process for concentrating an aqueous solution of temperature-sensitive substances using a freeze-concentrating stage, characterized in that

a) the solution is subjected to a separation process in the form of ultrafiltration and
b) the solution separated off in stage a) and containing the temperature-sensitive substances is subjected to a freeze-concentrating process.

2. A process as claimed in Claim 1, characterized in that the solution separated off in stage a) and containing the temperature-sensitive substances is subjected to another separation process in a stage c) preceding the freeze-concentrating stage.

3. A process as claimed in Claims 1 and 2, characterized in that in stage c) the solution is subjected to reverse osmosis as the further separation process.

4. A process as claimed in Claims 1 to 3, characterized in that the remaining solutions accumulating in stages a) or a) and c) and containing the less temperature-sensitive substances are subjected in a stage d) to an evaporation and/or drying process.

5. A process as claimed in Claims 1 to 4, characterized in that the concentrates obtained in stages b) and d) are combined with one another.

6. A process as claimed in Claims 1 to 5, characterized in that the solutions separated off in stages a) or a) and c) and containing the temperature-sensitive substances and the ice-free solution leaving the crystallizer of the freeze-concentrating stage are continuously circulated through stages a) or a) and c) and b).

## Revendications

1. Procédé de concentration d'une solution aqueuse de substances sensibles à la température avec utilisation d'un stade de concentration par congélation, caractérisé en ce que

a) on soumet la solution à un procédé de séparation sous forme d'un processus d'ultrafiltration et
b) on soumet la solution séparée au stade a, contenant les substances sensibles à la température, à un processus de concentration par congélation.

2. Procédé selon la revendication 1, caractérisé en ce qu'on soumet à un procédé supplémentaire de séparation la solution séparée au stade a et contenant les substances sensibles à la température dans un stade c intercalé avant le procédé de concentration par congélation.

3. Procédé selon les revendications 1 et 2, caractérisé en ce qu'on soumet la solution dans le stade c, en tant que procédé de séparation supplémentaire, à un processus d'osmose inverse.

4. Procédé selon les revendications 1 à 3, caractérisé en ce qu'on soumet les solutions restantes obtenues aux stades a ou a et c, contenant les substances moins sensibles à la température, à un processus d'évaporation et/ou de séchage dans un stade d.

5. Procédé selon les revendications 1 à 4, caractérisé en ce qu'on réunit entre eux les concentrés obtenus aux stades b et d.

6. Procédé selon les revendications 1 à 5, caractérisé en ce que les solutions séparées aux stades a ou a et c, contenant les substances sensibles à la température, de même que la solution exempte de glace quittant le cristallisoir du stade de concentration par congélation, sont continuellement recyclées à travers les stades a ou a et c de même que b.

**Abbildung 1**

**Abbildung 2**